# EUROPEAN PATENT APPLICATION

(11) **EP 4 703 719 A1**
(43) Date of publication of application: **04.03.2026**
(21) Application number: 23935435.0
(22) Date of filing: 23.10.2023
(51) Int. Cl.: G01N 27/62, H01J 49/04, H01J 49/10

(54) **LASER ABLATION ICP ANALYSIS METHOD AND ANALYSIS DEVICE**

(30) Priority: 28.04.2023 WO PCT/JP2023/016905
(71) Applicant: RORZE IAS Inc., Hino-shi, Tokyo 191-0011 (JP)
(72) Inventor: KAWABATA Katsuhiko, Hino-shi, Tokyo 191-0011 (JP); SUZUKI Koshi, Hino-shi, Tokyo 191-0011 (JP); ICHINOSE Tatsuya, Hino-shi, Tokyo 191-0011 (JP)
(74) Representative: Weickmann & Weickmann PartmbB
(86) International application number: PCT/JP2023/038129
(87) International publication number: WO 2024/224662

(57) **Abstract**

A laser ablation ICP analysis method in which an analysis sample is irradiated with a laser beam to atomize the analysis sample, thus generating an aerosol of the analysis sample, and the aerosol of the analysis sample is recovered, and is subjected to an inductively coupled plasma mass analysis. The method includes: disposing a non-hermetically sealed chamber with an opening of a bottom plate of the non-hermetically sealed chamber, which includes a glass window located on the side opposite to the opening and is made of a quartz, located proximate to the surface of the analysis sample; introducing a chamber-use inert gas into the non-hermetically sealed chamber to bring an inside of the non-hermetically sealed chamber into an atmosphere of the chamber-use inert gas, and causing the chamber-use inert gas to leak from the opening; performing laser beam irradiation toward the opening to generate the aerosol of the analysis sample; and discharging the aerosol of the analysis sample from the inside of the non-hermetically sealed chamber together with the chamber-use inert gas by suction from an ejector, a nebulizer, or a vacuum pump for the inductively coupled plasma mass analysis.

## Description

### FIELD OF THE INVENTION

The present invention relates to a laser ablation ICP analysis method and an analysis device, an analysis sample being evaporated and atomized by laser beam irradiation, and subjected to an ICP mass analysis in the method.

### DESCRIPTION OF THE RELATED ART

A known method for performing a mass analysis on an analysis sample using high frequency inductively coupled plasma (ICP) is a laser ablation ICP analysis method in which a minute region of the analysis sample is irradiated with a laser to evaporate and atomize the sample at the irradiation position, thus generating an aerosol of the analysis sample, and the aerosol of the analysis sample is subjected to an ICP mass analysis. The laser ablation ICP analysis method allows a continuous mass analysis of a predetermined region on the surface of the analysis sample with high accuracy, thus being utilized in a wide range of fields, such as an analysis of contaminants in a semiconductor substrate, an analysis of element distribution or isotope ratio in a geological sample, and an analysis of trace elements contained in a biomaterial (bark, cells, or the like).

In this laser ablation ICP analysis method, as described above, the analysis sample is irradiated with a laser to evaporate and atomize the analysis sample, thus generating an aerosol of the analysis sample and, thereafter, the aerosol of the analysis sample is introduced into an ICP analysis device, and is subjected to a mass analysis. The following various analysis techniques are proposed as such an analysis method.

Patent Document 1 discloses a method in which a cell having a bottom portion with an opening part is used, laser irradiation is performed with the cell directly in close contact with an analysis sample, and an aerosol of the analysis sample is caused to flow into an ICP analysis device with the use of the flow of an argon gas. In this method, the cell is in close contact with the surface of the analysis sample, and the argon gas purges the aerosol of the analysis sample, thus facilitating the inflow of the analysis sample into the ICP analysis device. The invention disclosed in Patent Document 1 enables an analysis with the cell moved to a desired position on the analysis sample, thus accommodating analysis samples with large surface areas.

Patent Document 2 proposes a laser ablation ICP analysis method in which an analysis sample disposed in a chamber is irradiated with a laser beam, and the analysis sample atomized by the laser beam is recovered using a carrier gas, and is subjected to an inductively coupled plasma mass analysis, wherein the atomized analysis sample is suctioned and discharged from the inside of the chamber together with the carrier gas, and is subjected to the inductively coupled plasma mass analysis. The invention disclosed in Patent Document 2 can suppress diffusion of the atomized analysis sample in the cell, thus achieving a highly sensitive analysis.

Patent Document 3 proposes an analysis method in which a sample is converted into fine particles with a laser ablation device in an atmosphere of a first gas, the fine particles are carried from the laser ablation device to a gas replacement device by the first gas serving as a carrier gas, at least a portion of the carrier gas, being the first gas, is replaced with a second gas with the gas replacement device, the fine particles are carried from the gas replacement device to a plasma analysis device by the replaced carrier gas, and constituent elements of the fine particles are analyzed with the plasma analysis device. The invention disclosed in Patent Document 3 uses a helium gas as the first gas, and uses an argon gas as the second gas and hence, it is possible to prevent a situation in which optimization of analysis conditions is prevented by properties of the carrier gas that carries fine particles, or by gas components generated due to laser ablation. Accordingly, it is possible to stably measure multiple kinds of elements with high sensitivity and high accuracy without impairing ease of operation, rapidity, or convenience.

Patent Document 4 proposes a laser ablation mass spectrometer including: a laser ablation device (LA device) formed of a laser transmitter and an ablation chamber in which a solid sample is housed; and an inductively coupled plasma mass spectrometer (ICP-MS device) that is in fluid communication with this ablation chamber, an aerosol generated from the vaporization of the sample being introduced into the inductively coupled plasma mass spectrometer together with a carrier gas, a mass analysis of the aerosol of the sample being performed in the inductively coupled plasma mass spectrometer, wherein the ablation chamber is a tubular passage with a double tube structure formed of an outer tube and an inner tube, the inside of the inner tube forms a first flow passage, a space between the inner tube and the outer tube forms a second flow passage, an introduction passage that allows the first flow passage to be in fluid communication with the ICP-MS device is provided at the intermediate position of the inner tube, the ablation chamber is fixed in an attitude with a gap provided between the ablation chamber and the solid sample, the aerosol of the sample is generated by laser ablation, the carrier gas is introduced into the first flow passage and the second flow passage to flow toward the solid sample, and the carrier gas flowing through the second flow passage is reflected on the surface of the solid sample, and is introduced into the first flow passage, thus introducing the aerosol of the sample into the introduction passage. The invention disclosed in Patent Document 4 can achieve a laser ablation mass spectrometer that can smoothly provide the aerosol of the solid sample from the ablation chamber to the ICP-MS device, and that exhibits excellent cleaning performance for the inside of the ablation chamber.

Patent Document 5 proposes a substrate analysis method utilizing a substrate analysis nozzle that ejects an analysis liquid from a distal end to sweep the surface of the substrate with the ejected analysis liquid and, thereafter, suctions the analysis liquid, wherein a liquid receiving plate that receives the ejected analysis liquid is disposed at the position that faces the distal end of the nozzle, the analysis liquid ejected from the distal end is held between the distal end of the nozzle and the liquid receiving plate, the position of the substrate is adjusted to allow insertion of the end portion of the substrate between the distal end of the nozzle and the liquid receiving plate, the end portion of the substrate is in contact with the analysis liquid held between the distal end of the nozzle and the liquid receiving plate, and the nozzle and the liquid receiving plate are simultaneously moved along the peripheral edge of the substrate with the end portion of the substrate being in contact with the analysis liquid, thus analyzing the end portion of the substrate. The invention disclosed in Patent Document 5 allows the end portion of a substrate, such as a semiconductor wafer, to be rapidly analyzed with a simpler device structure, more specifically, allows only a bevel portion at the end portion of the substrate, or an edge portion to be rapidly analyzed.

### Prior Art Document

### Patent Document

Patent Document 1
   Japanese Patent Application Laid-Open No. 2001-13074
Patent Document 2
   Japanese Patent Application Laid-Open No. 2016-40537
Patent Document 3
   WO2010/018738
Patent Document 4
   Japanese Patent Application Laid-Open No. 2012-64523
Patent Document 5
   Japanese Patent Application Laid-Open No. 2020-106303

### SUMMARY OF THE INVENTION

### [Technical Problem]

As described above, various types of prior art relating to a laser ablation ICP analysis technique have been proposed. However, it is pointed out that rapid analysis processing with high sensitivity and high analysis accuracy has not yet been achieved. For example, although the technique of Patent Document 1 allows an analysis at a desired position on the surface of a sample having various shapes, the cell is brought into close contact with the surface of the sample, so that the contact portion on the surface of the analysis sample is likely to be contaminated.

The technique of Patent Document 2 requires the analysis sample to be disposed in the cell, so that sufficient rapidity has not yet been achieved. The technique of Patent Document 3 requires the gas replacement device and hence, the sample is diffused before introduction into the ICP-MS device, making it difficult to perform analysis of trace amounts.

In the technique of Patent Document 4, the ablation chamber having the double tube structure or a triple tube structure is fixed in an attitude with a gap provided between the ablation chamber and the solid sample and hence, the solid sample is not contaminated due to contact, and a desired position on the solid sample can be analyzed. However, this method sends an atomized sample into the ICP analysis device in such a way as to purge the sample with a carrier gas introduced into the ablation chamber and hence, a change in a gap between the solid sample and the ablation chamber varies the amount of atomized sample to be sent into the ICP analysis device. Thus, this method has not yet achieved an analysis with sufficiently high accuracy. Therefore, at present, this analysis technique of Patent Document 4 is seldom used in the field of laser ablation ICP analysis.

The technique of Patent Document 5 allows the end portion of a substrate, such as a semiconductor wafer, to be rapidly analyzed with a simpler device structure. However, in this method, the analysis liquid is brought into contact with the end portion of the substrate to dissolve impurities from the end portion of the substrate into the analysis liquid for analysis and hence, it is difficult to analyze trace amounts of impurities. In addition, it is difficult for the analysis method of Patent Document 5 to analyze impurities at a local portion, such as the end portion of the substrate.

The present invention has been made under such circumstances, and it is an object of the present invention to provide a laser ablation ICP analysis technique that enables rapid analysis processing while maintaining high sensitivity and high analysis accuracy.

### [Solution to Problem]

The present invention is drawn to a laser ablation ICP analysis method in which an analysis sample is irradiated with a laser beam to atomize the analysis sample, thus generating an aerosol of the analysis sample, and the aerosol of the analysis sample is recovered, and is subjected to an inductively coupled plasma mass analysis, the laser ablation ICP analysis method including: disposing a non-hermetically sealed chamber proximate to and in a non-contact state with the analysis sample, the non-hermetically sealed chamber including an opening and a glass window, the opening allowing exposure of a portion of the analysis sample, the glass window being made of a quartz, and allowing laser beam irradiation of the analysis sample exposed through the opening; introducing a chamber-use inert gas, being an argon gas or a mixed gas of an argon and a helium, into the non-hermetically sealed chamber to bring an inside of the non-hermetically sealed chamber into an atmosphere of the chamber-use inert gas, and causing the chamber-use inert gas to leak from the opening; irradiating the analysis sample exposed through the opening with the laser beam to generate the aerosol of the analysis sample; and discharging the aerosol of the analysis sample from the inside of the non-hermetically sealed chamber together with the chamber-use inert gas by suction from an ejector, a nebulizer, or a vacuum pump for the inductively coupled plasma mass analysis.

In the laser ablation ICP analysis method of the present invention, there is no possibility of the non-hermetically sealed chamber contacting the analysis sample and hence, it is possible to suppress contaminants on the analysis sample. Further, the aerosol of the analysis sample generated by laser irradiation is discharged from the non-hermetically sealed chamber by suction from the ejector, the nebulizer, or the vacuum pump, and is subjected to the inductively coupled plasma mass analysis and hence, a sufficient amount of aerosol of the analysis sample is stably supplied to the inductively coupled plasma analysis, thereby achieving analysis with high accuracy. In addition, using the non-hermetically sealed chamber eliminates an operation of disposing an analysis sample in a cell, and allows analysis to be performed with the non-hermetically sealed chamber disposed proximate to and in a non-contact state with the analysis sample and hence, rapid analysis processing can be performed on an analysis sample having various shapes.

In the laser ablation ICP analysis method of the present invention, it is preferable that a suction amount for suction from the ejector, the nebulizer, or the vacuum pump be set to be smaller than an introduction amount of the chamber-use inert gas introduced into the non-hermetically sealed chamber. When the suction from the ejector, the nebulizer, or the vacuum pump is larger than the introduction amount of chamber-use inert gas introduced into the non-hermetically sealed chamber, atmospheric air intrudes into the non-hermetically sealed chamber through the opening, thus making it difficult to maintain the argon plasma in an inductively coupled plasma mass spectrometer. It is desirable that the suction amount from the ejector, the nebulizer, or the vacuum pump be set to 70% to 90% of the introduction amount of chamber-use inert gas introduced into the non-hermetically sealed chamber. When the suction amount is less than 70%, there is a strong tendency for an aerosol of the analysis sample generated by laser irradiation to diffuse in the non-hermetically sealed chamber, so that a sufficient amount of aerosol of the analysis sample is not suctioned for the inductively coupled plasma analysis. When the suction amount exceeds 90%, the risk of outside air intrusion into the non-hermetically sealed chamber increases with a change in the gap between the surface of the analysis sample and the opening.

A laser ablation ICP analysis method of the present invention can be performed with a laser ablation ICP analysis device provided with: a sample moving means configured to move an analysis sample with the analysis sample disposed on the sample moving means; a laser irradiation means configured to irradiate the analysis sample with a laser beam; and an ICP analysis means, the laser ablation ICP analysis device including: a non-hermetically sealed chamber including a bottom plate and a glass window, the bottom plate having an opening, the glass window being located above the opening, and being made of a quartz; a suction means connected to any one of an ejector, a nebulizer, or a vacuum pump to suction an inner space of the non-hermetically sealed chamber; and a gas supply means configured to supply a chamber-use inert gas, being an argon gas or a mixed gas of an argon and a helium, into the non-hermetically sealed chamber, wherein the laser irradiation means is capable of irradiating a center position of the opening with the laser beam through the glass window of the non-hermetically sealed chamber, and a suction port of the suction means is disposed in a vicinity of a laser irradiation position.

In the analysis method and the analysis device of the present invention, the ejector, the nebulizer, or the vacuum pump may be used as the suction means for the aerosol of the analysis sample. The ejector is a fluid pump that ejects an argon gas from a nozzle, and that suctions an argon gas from the inside of the non-hermetically sealed chamber using negative pressure at the outlet of an ejection part. The nebulizer is used to introduce the sample into the ICP analysis device, and can suction an argon gas from the inside of the non-hermetically sealed chamber with a jet of the inert gas, such as an argon, from a nozzle. A dry pump may be used as the vacuum pump. In the present invention, it is preferable to use the ejector. The reason for this is that when the vacuum pump is used, the analysis sample passes through the pump, thus easily causing memory (a phenomenon in which an aerosol of the analysis sample adheres to an inner pipe or the like, thus causing a loss), or diffusion of the sample in the pump.

The analysis method and the analysis device of the present invention does not have any specifically limited shapes and sizes of the non-hermetically sealed chamber. However, an excessively small capacity of the chamber is liable to cause an aerosol of the analysis sample generated by laser irradiation to be excessively diffused by the chamber-use inert gas introduced into the non-hermetically sealed chamber. For this reason, in the case of a cylindrical non-hermetically sealed chamber, for example, it is preferable that an inner diameter be 50 mm or more, and a height be 20 mm or more. A cylindrical non-hermetically sealed chamber suitable for practical use has an inner diameter of 50 mm to 250 mm, and a height of 20 mm to 150. It is also preferable that the opening of the non-hermetically sealed chamber have a circular shape with a diameter of 10 mm or more. An excessively small opening is likely to cause leakage of the aerosol of the analysis sample, generated by laser irradiation, from the opening. It is also preferable that a distance between the surface of the analysis sample and the opening be set to 0.5 mm to 1.5 mm in disposing the opening of the non-hermetically sealed chamber proximate to the surface of the analysis sample. A distance of less than 0.5 mm increases the risk of contact between the opening and the surface of the analysis sample, whereas a distance exceeding 1.5 mm increases the amount of leakage of the chamber-use inert gas, introduced into the non-hermetically sealed chamber, from the opening, thus easily causing leakage of the aerosol of the analysis sample from the opening. It is preferable that the size of the non-hermetically sealed chamber and the diameter of the opening be suitably optimized according to the flatness of the surface of the analysis sample.

A generally known laser beam, such as a Nd-YAG laser, an excimer laser, or a femtosecond laser, may be used as the laser beam in the present invention. Although a gas that can be introduced into the plasma in the inductively coupled plasma mass spectrometer may be used as the chamber-use inert gas, in general, the chamber-use inert gas is an argon gas or a helium gas.

When an analysis sample is a substrate, and the outer peripheral end portion of the substrate is analyzed by the laser ablation ICP analysis method of the present invention, the analysis can be performed with a laser ablation ICP analysis device provided with: a sample moving means configured to move the analysis sample with the analysis sample disposed on the sample moving means; a laser irradiation means configured to irradiate the analysis sample with a laser beam; and an ICP analysis means, the laser ablation ICP analysis device including: a non-hermetically sealed chamber including a bottom plate and a glass window, the bottom plate having an opening, the glass window being located above the opening, and being made of a quartz; a sample moving means provided with a substrate placing plate on which the outer peripheral end portion of the substrate, being the analysis sample, is placed; a suction means connected to any one of an ejector, a nebulizer, or a vacuum pump to suction an inner space of the non-hermetically sealed chamber; and a gas supply means configured to supply a chamber-use inert gas, being an argon gas or a mixed gas of an argon and a helium, into the non-hermetically sealed chamber, wherein the laser irradiation means is capable of irradiating a center position of the opening with the laser beam through the glass window of the non-hermetically sealed chamber, and a suction port of the suction means is disposed in a vicinity of a laser irradiation position.

In the case in which the analysis sample is a substrate, and the outer peripheral end portion of the substrate is analyzed by the laser ablation ICP analysis method of the present invention, the following was found. When the substrate, being the analysis sample disposed on the sample moving means, is simply moved to cause the opening of the non-hermetically sealed chamber to be disposed proximate to and in a non-contact state with the outer peripheral end portion of the substrate, the chamber-use inert gas is introduced into the non-hermetically sealed chamber, and is caused to leak from the opening, a portion of the analysis sample exposed through the opening is irradiated with a laser beam to generate an aerosol of the analysis sample, and the aerosol of the analysis sample is discharged from the inside of the non-hermetically sealed chamber together with the chamber-use inert gas by suction from the ejector, the nebulizer, or the vacuum pump, air is taken into the non-hermetically sealed chamber through the opening, from a space located outside the outer peripheral end portion of the substrate, thus making it difficult to perform an inductively coupled plasma mass analysis. Therefore, when the analysis sample is a substrate, and the outer peripheral end portion of the substrate is analyzed, the laser ablation ICP analysis method of the present invention is executed in a state in which the substrate placing plate, on without the outer peripheral end portion of the substrate is placed, is provided to a sample stand. The substrate placing plate of the present invention has a placing surface that extends outward beyond the outer peripheral end portion of the substrate and hence, when the opening of the non-hermetically sealed chamber is disposed at the position corresponding to the outer peripheral end portion, and a chamber-use inert gas is introduced into the non-hermetically sealed chamber, the chamber-use inert gas leaking from the opening is discharged to the outside along the placing surface, thus exhibiting a function of preventing outside air from being taken into the non-hermetically sealed chamber. Adopting such a sample moving means including the substrate placing plate allows a local analysis of the outer peripheral end portion of the substrate, being the analysis sample. In addition, when the substrate is rotated while laser beam irradiation is performed, it is possible to analyze the entire periphery of the outer peripheral end portion of the substrate at once.

The substrate placing plate of the present invention does not have any specifically limited shapes. For example, in the case in which the analysis sample is a circular substrate, such as a wafer substrate, a circular substrate placing plate having a larger diameter than this circular substrate may be used. In the case in which an analysis is performed only on a portion of the outer peripheral end portion of a circular substrate, such as a wafer substrate, a rectangular substrate placing plate may be adopted on which only the outer peripheral end portion, which is the target of analysis, can be placed. In the present invention, a substrate placing plate made of a quartz or extremely high-purity metal may be used. When impurities at the outer peripheral end portion of the substrate are unclear, it is preferable to use a substrate placing plate made of extremely high-purity metal. When a substrate placing plate made of a quartz is used, trace elements in a quartz may affect analysis accuracy. Whereas, when a substrate placing plate made of extremely high-purity metal, which is a known element, is used, it is possible to perform the analysis by taking into account the effect of the known element on analysis accuracy. Extremely high-purity metal refers to metal with purity of 5N (99.999%) or more, and it is preferable to adopt gold (Au), copper (Cu), aluminum (Al), or the like as metal.

When an analysis sample is a substrate, and only the outer peripheral end portion of the substrate is analyzed by the laser ablation ICP analysis method of the present invention, it is also possible to adopt a laser ablation ICP analysis device provided with: a sample moving means configured to move the analysis sample with the analysis sample disposed on the sample moving means; a laser irradiation means configured to irradiate the analysis sample with a laser beam; and an ICP analysis means, the laser ablation ICP analysis device including: a non-hermetically sealed chamber including a substrate insertion part and a glass window, the substrate insertion part allowing insertion of the substrate, being the analysis sample, in a non-contact state with horizontal movement of the substrate, the substrate insertion part having an opening that allows exposure of the outer peripheral end portion of the substrate inserted into the substrate insertion part, the glass window being made of a quartz, and allowing laser beam irradiation of the outer peripheral end portion of the substrate exposed through the opening; a suction means connected to any one of an ejector, a nebulizer, or a vacuum pump to suction an inner space of the non-hermetically sealed chamber; and a gas supply means configured to supply a chamber-use inert gas, being an argon gas or a mixed gas of an argon and a helium, into the non-hermetically sealed chamber, wherein the laser irradiation means is capable of irradiating the outer peripheral end portion of the substrate exposed through the opening with the laser beam through the glass window of the non-hermetically sealed chamber, and a suction port of the suction means is disposed in a vicinity of a laser irradiation position.

When the analysis sample is a substrate, and only the outer peripheral end portion of the substrate is analyzed, it is sufficient to irradiate only the outer peripheral end portion of the substrate with a laser beam. Accordingly, the structure of the non-hermetically sealed chamber includes the substrate insertion part and the glass window, the substrate insertion part allowing insertion of the substrate in a non-contact state with horizontal movement of the substrate, the substrate insertion part having the opening that allows exposure of the outer peripheral end portion of the inserted substrate, the glass window being made of a quartz, and allowing laser beam irradiation of the outer peripheral end portion of the substrate exposed through the opening. With the use of the non-hermetically sealed chamber having such a structure, an analysis can be performed only on the outer peripheral end portion of the substrate when the horizontally moved substrate is inserted into the substrate insertion part in a non-contact state, only the outer peripheral end portion of the substrate is exposed through the opening, a chamber-use inert gas is supplied into the non-hermetically sealed chamber in such a state to bring the inside of the non-hermetically sealed chamber into the atmosphere of the chamber-use inert gas, the chamber-use inert gas is caused to leak from the opening, the outer peripheral end portion of the substrate exposed through the opening is irradiated with a laser beam to generate an aerosol of the analysis sample, and the aerosol of the analysis sample is discharged from the inside of the non-hermetically sealed chamber together with the chamber-use inert gas by suction from the ejector, the nebulizer, or the vacuum pump, and is subjected to an inductively coupled plasma mass analysis. Also in this case, it is possible to perform a local analysis on the outer peripheral end portion of the substrate. In addition, by rotating the substrate while laser beam irradiation is performed, it is possible to analyze the entire periphery of the outer peripheral end portion of the substrate in a single step.

### [Advantageous Effects of Invention]

As described above, the laser ablation ICP analysis method of the present invention allows rapid analysis processing while maintaining high sensitivity and high analysis accuracy. In addition, it is possible to perform an analysis by disposing the non-hermetically sealed chamber proximate to the surface of the analysis sample and hence, there is little possibility that the analysis sample has any specifically limited shape and size, leading to rapid analysis processing with high sensitivity and high accuracy. Further, also when an analysis is performed on the outer peripheral end portion of a substrate, such as a wafer, as the analysis sample, it is possible to achieve rapid analysis processing while high sensitivity and high analysis accuracy are maintained.

### BRIEF DESCRIPTION OF THE DRAWINGS

Fig. 1 is a schematic cross-sectional view of a laser ablation ICP analysis device of First Embodiment;
Fig. 2 shows measurement data obtained from the ICP analysis device of First Embodiment when laser irradiation was performed;
Fig. 3 is a schematic cross-sectional view of a laser ablation ICP analysis device of Second Embodiment for analyzing the outer end portion of a substrate;
Fig. 4 is a schematic cross-sectional view of a laser ablation ICP analysis device of Third Embodiment for analyzing the outer end portion of a substrate;
Fig. 5 shows measurement data obtained from the ICP analysis device of Second Embodiment when laser irradiation was performed;
Fig. 6 shows measurement data obtained from the ICP analysis device of Second Embodiment when laser irradiation was performed; and
Fig. 7 shows measurement data obtained from the ICP analysis device of Second Embodiment when laser irradiation was performed.

### DETAILED DESCRIPTION OF THE PREFERRED EMBODIMENTS

Hereinafter, embodiments of the present invention will be described.

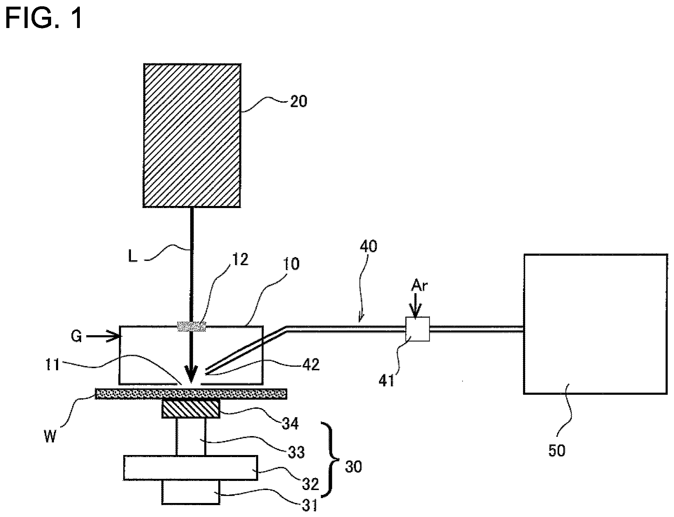

First Embodiment: In First Embodiment, a description will be made for a case in which laser ablation ICP analysis is performed using the surface of a wafer substrate as the analysis sample. Fig. 1 shows a schematic cross-sectional view of a laser ablation ICP analysis device of First Embodiment. A non-hermetically sealed chamber 10 is made of an aluminum, and has a circular columnar shape with a circular bottom surface. The bottom surface has an opening 11 with a diameter of 10 mm, and a glass window 12 made of a quartz is attached to the upper surface of the non-hermetically sealed chamber to allow laser irradiation, the upper surface being located on the side opposite to the opening 11. A laser irradiation means 20 that performs laser irradiation is disposed above the non-hermetically sealed chamber 10.

An analysis sample W is disposed on a sample moving means 30. The sample moving means 30 is formed of an X-axis stage 31, a Y-axis stage 32, a Z-axis stage 33, and a θ-axis stage 34 (rotation stage), and the analysis sample W is disposed on the θ-axis stage. A suction means 40 is connected to an ejector 41, and a suction port 42 is disposed in the vicinity of the opening 11. The suction means 40 is also coupled to an ICP analysis device 50 that suctions and analyzes an aerosol of the analysis sample generated in the non-hermetically sealed chamber 10. In Fig. 1, "G" denotes a chamber-use inert gas, and the chamber-use inert gas is introduced from a position shown by an arrow.

A substrate was analyzed with the laser ablation ICP analysis device described in First Embodiment. To prepare an object to be analyzed, 5 µL of 0.1 ppb standard solution (contained elements Fe, Cu, Pb, Na) were added dropwise onto the surface of a silicon wafer substrate, and were air dried.

A columnar cylindrical body having an inner diameter of 50 mm and a height of 20 mm, and made of an aluminum was used as the non-hermetically sealed chamber. The bottom portion of the columnar cylindrical body has an opening with a diameter of 10 mm, and a glass window made of a quartz is disposed at the upper portion of the columnar cylindrical body, the upper portion being located on the side opposite to the bottom portion. A gas supply device and an ejector are attached to this non-hermetically sealed chamber, the gas supply device supplying the chamber-use inert gas, the suction port of the ejector being located in the non-hermetically sealed chamber. To enable ICP analysis of the suctioned gas, this ejector is connected to an ICP analysis device (model 8900 made by Agilent Technologies, Inc.).

The silicon wafer substrate, being the object to be analyzed, was disposed on the sample moving means (X-Y-Z-θ stage) and, thereafter, the silicon wafer substrate was moved and disposed with a 1 mm gap from the bottom surface of the non-hermetically sealed chamber. In this state, the opening of the non-hermetically sealed chamber was located approximately 5 mm to the side of the portion of the silicon wafer on which the standard solution was added dropwise.

An argon gas as the chamber-use inert gas was supplied into the non-hermetically sealed chamber at a flow rate of 1 L/min to fill the non-hermetically sealed chamber with the argon gas, being the chamber-use inert gas, the argon gas was introduced into the ejector, and the argon gas containing an aerosol of the analysis sample was then suctioned from the non-hermetically sealed chamber at 0.8 L/min. The suction port of the ejector was disposed in the vicinity of the opening through which laser irradiation is performed. Thereafter, an analysis was performed while laser irradiation was performed with a laser ablation device, which is disposed above the non-hermetically sealed chamber, and while the silicon wafer substrate was moved with the sample moving means in the direction in which the sample was added dropwise. Laser conditions were laser frequency of 257 nm, laser irradiation frequency of 10,000 Hz, and a laser beam diameter of 13 µm.

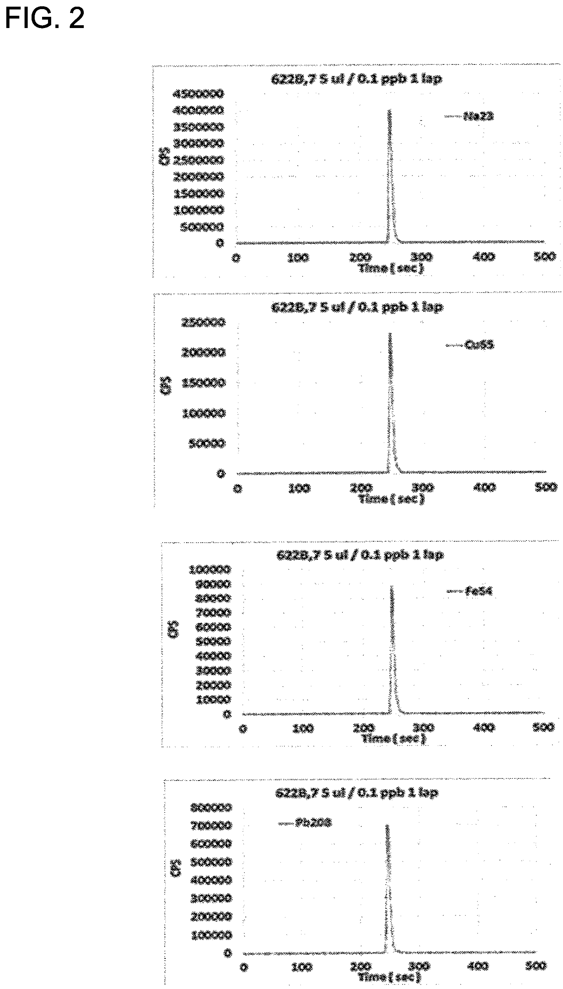

Fig. 2 shows measurement data obtained from the ICP analysis device when laser irradiation was performed. Four graphs in Fig. 2 show, from the top, measurement data for a Na, a Cu, an Fe, and a Pb. Signal intensity is shown on the vertical axis, and time is shown on the horizontal axis. It was found that when the portion on which the standard solution is added dropwise and dried is subjected to laser irradiation, a sharp peak is detected for each element contained in the standard solution.

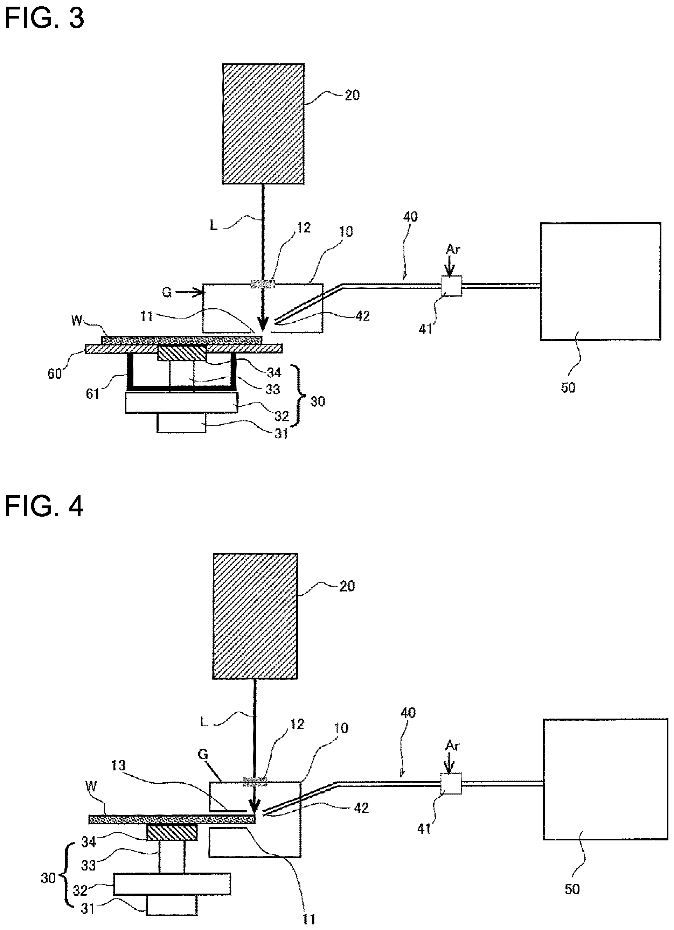

Second Embodiment: In Second Embodiment, a description will be made for a case in which laser ablation ICP analysis is performed using the outer peripheral end portion of a wafer substrate as the analysis sample. Fig. 3 shows a schematic cross-sectional view of a laser ablation ICP analysis device of Second Embodiment.

The laser ablation ICP analysis device shown in Fig. 3 differs from that of First Embodiment in that an analysis sample W (wafer substrate) is placed on a substrate placing plate 60. Configurations of the device other than the above-mentioned configuration are substantially equal to those of First Embodiment.

The substrate placing plate 60 supported by a support member 61 is installed on a sample moving means 30 in Second Embodiment, and the upper surface of this substrate placing plate 60 is flush with the upper surface of a θ-axis stage 34. The substrate placing plate 60 has a toroidal shape having a hole that allows insertion of the θ-axis stage, and the outer diameter of the substrate placing plate 60 is larger than the outer diameter of the analysis sample W (wafer substrate). In Second Embodiment, by moving the analysis sample W, which is placed on the substrate placing plate, with the sample moving means, the outer peripheral end portion of the analysis sample W (wafer substrate) is located at a position corresponding to an opening 11 of a non-hermetically sealed chamber 10. In this state, a chamber-use inert gas is supplied into the non-hermetically sealed chamber, a portion of the chamber-use inert gas is caused to leak from the opening, and the outer peripheral end portion of the analysis sample W exposed through the opening is irradiated with a laser to generate an aerosol of the analysis sample. This aerosol of the analysis sample is recovered by a suction means 40 connected to an ejector 41, and is analyzed by an ICP analysis device 50.

Third Embodiment: In Third Embodiment, a description will be made for a case in which laser ablation ICP analysis is performed using the outer peripheral end portion of a wafer substrate as the analysis sample, and a non-hermetically sealed chamber different from that in Second Embodiment is used. Fig. 4 shows a schematic cross-sectional view of a laser ablation ICP analysis device of Third Embodiment.

The laser ablation ICP analysis device shown in Fig. 4 differs from that of Second Embodiment in that an analysis sample W (wafer substrate) is inserted into a substrate insertion part 13 of a non-hermetically sealed chamber 10. Configurations of the device other than the above-mentioned configuration are basically substantially equal to those of Second Embodiment.

The non-hermetically sealed chamber 10 in Third Embodiment is provided with the substrate insertion part 13 into which the analysis sample W (wafer substrate) is inserted, and this substrate insertion part 13 is provided with an opening 11 that allows exposure of the outer peripheral end portion of the inserted analysis sample W (wafer substrate). In Third Embodiment, the analysis sample W (wafer substrate) disposed on a sample moving means 31 is inserted into the substrate insertion part 13 of the non-hermetically sealed chamber 10 in a non-contact state by moving the analysis sample W (wafer substrate), and is positioned such that the outer peripheral end portion of the analysis sample W is exposed through the opening 11 of the substrate insertion part 13. In this state, a chamber-use inert gas is supplied into the non-hermetically sealed chamber, a portion of the chamber-use inert gas is caused to leak from the opening, and the outer peripheral end portion of the analysis sample W exposed through the opening is irradiated with a laser to generate an aerosol of the analysis sample. This aerosol of the analysis sample is recovered by a suction means 40 connected to an ejector 41, and is analyzed by an ICP analysis device 50.

Next, a description will be made for an analysis performed on the outer peripheral end portion of the silicon wafer substrate with the laser ablation ICP analysis device described in Second Embodiment.

A silicon wafer substrate with a diameter of 12 inches and a thickness of 775 µm was used as an object to be analyzed. A substrate placing plate made of an Al with purity of 5N, and having a diameter of 400 mm and a thickness of 2 mm was used. Conditions of the non-hermetically sealed chamber, the supply of an argon gas, suction from the ejector, and the like are set substantially equal to the analysis conditions described in First Embodiment.

In performing an analysis of the outer peripheral end portion, a contaminated outer peripheral end portion was irradiated with a laser to remove contaminants, a standard solution was added dropwise at two positions on the outer peripheral end portion from which the contaminants are removed, and the outer peripheral end portion was then analyzed. To prepare an object to be analyzed after contaminant removal, 1 µL of 10 ppb standard solution (contained elements V, Mn, Fe, Cu, Rb, Ag, Cs, Pb) was added dropwise at two positions on the outer peripheral end portion of a silicon wafer substrate. Thereafter, this outer peripheral end portion was analyzed.

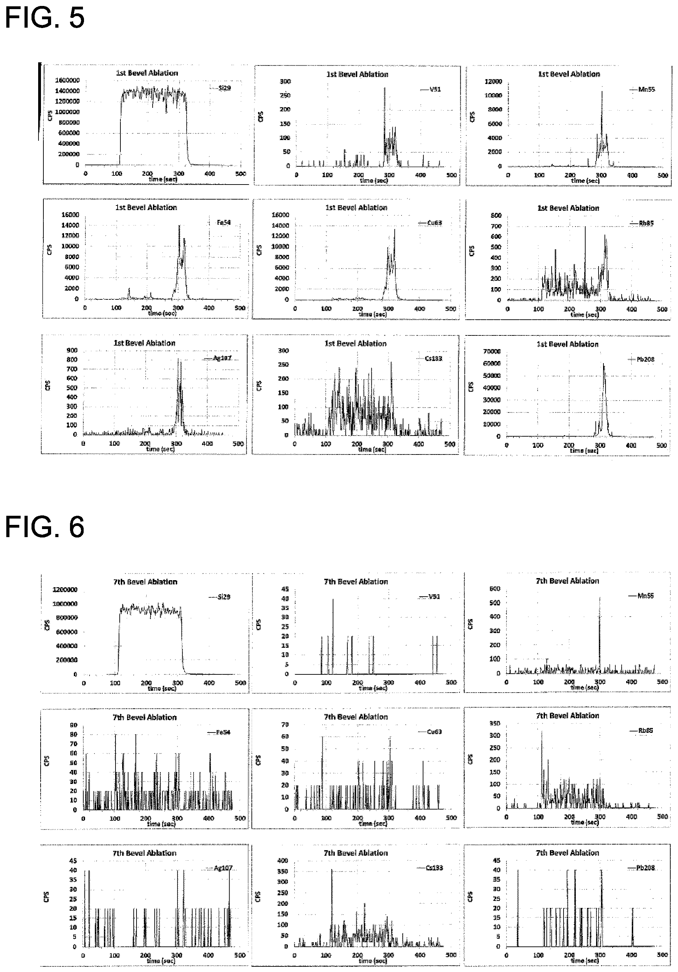

To remove the contaminants at the outer peripheral end portion, laser irradiation was performed on the outer peripheral end portion a plurality of times. In performing this laser irradiation for contaminant removal, the θ-axis stage was rotated at 0.25 mm/sec to remove the contaminants within an approximately 0.25 mm region at the outer peripheral end portion. Fig. 5 shows measurement data obtained from the ICP analysis device when the first laser irradiation for contaminant removal was performed on the outer peripheral end portion. Nine graphs in Fig. 5 show measurement data, wherein the upper section shows measurement data for a Si, a V, and a Mn from the left, the intermediate section shows measurement data for a Fe, a Cu, and a Rb from the left, and the lower section shows measurement data for a Ag, a Cs, and a Pb from the left. Signal intensity is shown on a vertical axis, and time is shown on a horizontal axis. It was confirmed from the measurement data shown in Fig. 5 that contaminants are present at the outer peripheral end portion. Such laser irradiation for contaminant removal was performed on the same position on the outer peripheral end portion seven times. Fig. 6 shows measurement data obtained from the ICP analysis device when the seventh laser irradiation was performed. Almost all contaminants were removed by the seventh laser irradiation.

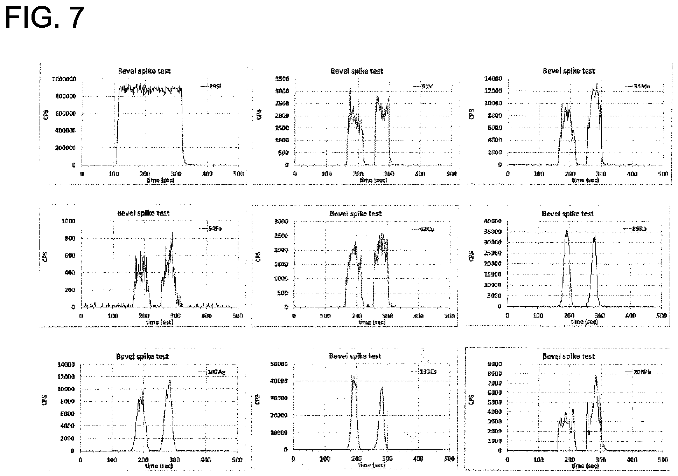

At the two positions on the outer peripheral end portion on which laser irradiation for contaminant removal was performed seven times in total, 1 µL of 10 ppb standard solution (contained elements V, Mn, Fe, Cu, Rb, Ag, Cs, Pb) was added dropwise, and was air dried and, thereafter, this outer peripheral end portion was analyzed in the same manner. Fig. 7 shows measurement data. As can be understood from measurement data for a V and a Mn in the upper section, measurement data for an Fe, a Cu, and a Rb in the intermediate section, and measurement data for a Ag, a Cs, and a Pb in the lower section of Fig. 7, it was found that peaks of respective elements in the standard solution appear for the two positions on which the solution was added dropwise.

### [Industrial Applicability]

The laser ablation ICP analysis method of the present invention allows rapid analysis processing while maintaining high sensitivity and high analysis accuracy. In addition, it is possible to perform an analysis by disposing the non-hermetically sealed chamber proximate to the surface of an analysis sample and hence, there is little possibility that the analysis sample has any specifically limited shapes or sizes. Thus, rapid analysis processing with high sensitivity and high analysis accuracy can be achieved.

### [Reference Signs List]

- 10: non-hermetically sealed chamber
- 11: opening
- 12: glass window
- 13: substrate insertion part
- 20: laser irradiation means
- 30: sample moving means
- 31: X-axis stage
- 32: Y-axis stage
- 33: Z-axis stage
- 34: θ-axis stage
- 40: suction means
- 41: ejector
- 42: suction port
- 50: ICP analysis device
- 60: substrate placing plate
- 61: support member
- W: analysis sample
- G: chamber-use inert gas
- L: laser beam
- Ar: argon gas

## Claims

1. A laser ablation ICP analysis method in which an analysis sample is irradiated with a laser beam to atomize the analysis sample, thus generating an aerosol of the analysis sample, and the aerosol of the analysis sample is recovered, and is subjected to an inductively coupled plasma mass analysis, the laser ablation ICP analysis method comprising:
disposing a non-hermetically sealed chamber proximate to and in a non-contact state with the analysis sample, the non-hermetically sealed chamber including an opening and a glass window, the opening allowing exposure of a portion of the analysis sample, the glass window being made of a quartz, and allowing laser beam irradiation of the analysis sample exposed through the opening;
introducing a chamber-use inert gas, being an argon gas or a mixed gas of an argon and a helium, into the non-hermetically sealed chamber to bring an inside of the non-hermetically sealed chamber into an atmosphere of the chamber-use inert gas, and causing the chamber-use inert gas to leak from the opening;
irradiating the analysis sample exposed through the opening with the laser beam to generate the aerosol of the analysis sample; and
discharging the aerosol of the analysis sample from the inside of the non-hermetically sealed chamber together with the chamber-use inert gas by suction from an ejector, a nebulizer, or a vacuum pump for the inductively coupled plasma mass analysis.

2. The laser ablation ICP analysis method according to claim 1, wherein a suction amount for suction from the ejector, the nebulizer, or the vacuum pump is set to be smaller than an introduction amount of the chamber-use inert gas introduced into the non-hermetically sealed chamber.

3. A laser ablation ICP analysis device used in the analysis method defined in either one of claim 1 or 2, and provided with: a sample moving means configured to move an analysis sample with the analysis sample disposed on the sample moving means; a laser irradiation means configured to irradiate the analysis sample with a laser beam; and an ICP analysis means,
the laser ablation ICP analysis device comprising:
a non-hermetically sealed chamber including a bottom plate and a glass window, the bottom plate having an opening, the glass window being located above the opening, and being made of a quartz;
a suction means connected to any one of an ejector, a nebulizer, or a vacuum pump to suction an inner space of the non-hermetically sealed chamber; and
a gas supply means configured to supply a chamber-use inert gas, being an argon gas or a mixed gas of an argon and a helium, into the non-hermetically sealed chamber, wherein
the laser irradiation means is capable of irradiating a center position of the opening with the laser beam through the glass window of the non-hermetically sealed chamber, and
a suction port of the suction means is disposed in a vicinity of a laser irradiation position.

4. A laser ablation ICP analysis device used in the analysis method defined in either one of claim 1 or 2, using a substrate as an analysis sample, and analyzing an outer peripheral end portion of the substrate,
the laser ablation ICP analysis device being provided with: a sample moving means configured to move the analysis sample with the analysis sample disposed on the sample moving means; a laser irradiation means configured to irradiate the analysis sample with a laser beam; and an ICP analysis means, the laser ablation ICP analysis device comprising:
a non-hermetically sealed chamber including a bottom plate and a glass window, the bottom plate having an opening, the glass window being located above the opening, and being made of a quartz;
a sample moving means provided with a substrate placing plate on which the outer peripheral end portion of the substrate, being the analysis sample, is placed;
a suction means connected to any one of an ejector, a nebulizer, or a vacuum pump to suction an inner space of the non-hermetically sealed chamber; and
a gas supply means configured to supply a chamber-use inert gas, being an argon gas or a mixed gas of an argon and a helium, into the non-hermetically sealed chamber, wherein
the laser irradiation means is capable of irradiating a center position of the opening with the laser beam through the glass window of the non-hermetically sealed chamber, and
a suction port of the suction means is disposed in a vicinity of a laser irradiation position.

5. A laser ablation ICP analysis device used in the analysis method defined in either one of claim 1 or 2, using a substrate as an analysis sample, and analyzing an outer peripheral end portion of the substrate,
the laser ablation ICP analysis device being provided with: a sample moving means configured to move the analysis sample with the analysis sample disposed on the sample moving means; a laser irradiation means configured to irradiate the analysis sample with a laser beam; and an ICP analysis means, the laser ablation ICP analysis device comprising:
a non-hermetically sealed chamber including a substrate insertion part and a glass window, the substrate insertion part allowing insertion of the substrate, being the analysis sample, in a non-contact state with horizontal movement of the substrate, the substrate insertion part having an opening that allows exposure of the outer peripheral end portion of the substrate inserted into the substrate insertion part, the glass window being made of a quartz, and allowing laser beam irradiation of the outer peripheral end portion of the substrate exposed through the opening;
a suction means connected to any one of an ejector, a nebulizer, or a vacuum pump to suction an inner space of the non-hermetically sealed chamber; and
a gas supply means configured to supply a chamber-use inert gas, being an argon gas or a mixed gas of an argon and a helium, into the non-hermetically sealed chamber, wherein
the laser irradiation means is capable of irradiating the outer peripheral end portion of the substrate exposed through the opening with the laser beam through the glass window of the non-hermetically sealed chamber, and
a suction port of the suction means is disposed in a vicinity of a laser irradiation position.
